# EUROPEAN PATENT APPLICATION

(11) **EP 1 469 606 A1**
(43) Date of publication of application: **20.10.2004**
(21) Application number: 04005783.8
(22) Date of filing: 11.03.2004
(51) Int. Cl.: H04B 1/16, H04J 4/00, H04B 7/26

(54) **Method for applying power signal of mobile station**

(30) Priority: 17.04.2003 KR 2003024489
(71) Applicant: LG ELECTRONICS INC., Seoul (KR)
(72) Inventor: Choi, Woong-Gil, Dalseo-Gu Daegu (KR)
(74) Representative: von Hellfeld, Axel, Dr. Dipl.-Phys.

(57) **Abstract**

A method for applying a power signal of a mobile station in a mobile communication system comprises starting a transmission or a reception by a mobile station, resetting a frame counter to an initial value, increasing the frame counter value, and controlling a power signal for each block inside the mobile station whenever the frame counter value is changed. The mobile communication system maybe a GSM using a TDMA method or a GPRS based system. The turn on time for each block inside the mobile station used is considered to set delay time, and a power ON signal is applied in advance of powering on an antenna switch in accordance with the delay time. As a result, mobile station operation may be adjusted to comply with a standard, stable operation of the mobile station can be assessed and, consumption power of a battery may be reduced, thus lengthening the battery use time.

## Description

### BACKGROUND OF THE INVENTION

### Field of the Invention

The present invention generally relates to a mobile communication system, and more particularly to a system and method for controlling power of a mobile station.

### Description of the Related Art

Mobile communication methods are generally classified into one of two types: North American synchronous method which uses a global positioning system (GPS) and the European asynchronous method which does not use GPS. The European method is implemented based on a global system for mobile communications(GSM) and a universal mobile telecommunications system (UMTS). UMTS is a next generation mobile telecommunications system (referred to as IMT-2000 in Europe) which is based on a standard developed by applying CDMA and GSM techniques. GSM is a standard developed by mixing FDMA and TDMA techniques for multiple access.

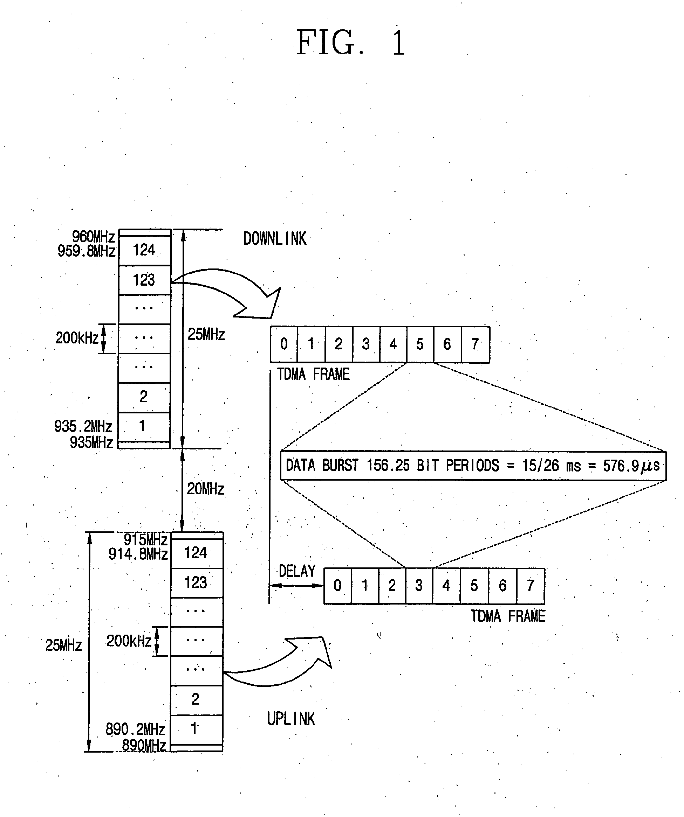

Figure 1 shows an FDMA frame and a TDMA frame used in GSM. As shown, 890~915MHz is allocated as an uplink band and 935~960MHz is allocated as a downlink band. A total frequency band of 2*25MHz is therefore allocated for GSM, where the 25MHz allocated to each of the uplink and downlink bands is divided into 124 channels of 200KHz band. The uplink is a transmission path established towards a base station from a mobile station, and the downlink is a transmission path established towards the mobile station from the base station.

The divided channels are again divided using the TDMA method. A time slot (or a burst period), which was a basic unit in the TDMA method, has a length of 15/26msand one TDMA frame has 8 time slots (#0~#7). That is, 8 users can simultaneously have a call per one channel. One time slot is maintained for 576.9µs, approximately 577µs, and has a frequency hopping of 217 times per one second. Also, the uplink channel has a transit delay for three time slots compared to the downlink channel, and the time is 577µs*3 = 1.731ms, approximately 1.73ms. In performing TDMA, a channel pattern is periodically repeated approximately every 3 hours.

A channel used to transmit voice and data signals is called as a traffic channel (TCH). The TCH is defined as a 26-frame multi-frame or a 26 TDMA frame group, and a length of the 26-frame multi-frame is 120ms. Among the 26 frames, 24 frames are for a traffic, one frame is a slow associated control channel (SACCH), and the remaining one is not used. The TCH of the uplink and the downlink is divided into 3 time slots. Therefore, the mobile station need not simultaneously perform a transmission and a reception, thereby simplifying the structure of the mobile station. Accordingly, a mobile station employing the GSM method can lengthen use time by reducing power consumption of its battery.

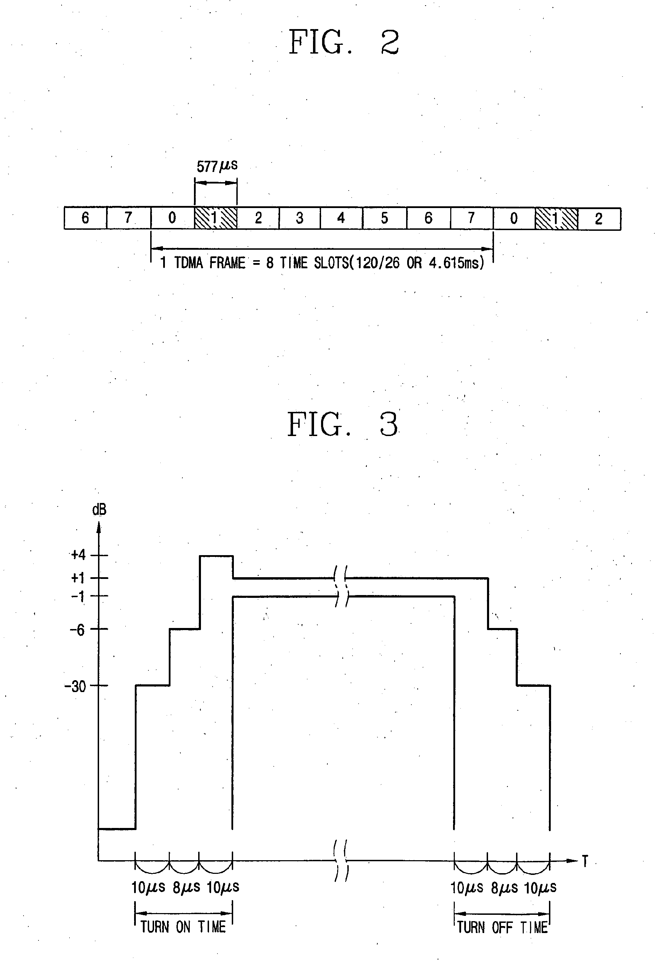

Figure 2 shows a TDMA frame structure wherein a_transmission is allocated to 1 time slot. In GSM, a transmission is performed only at one time slot (1 time slot) allocated in one TDMA frame and an idle state is maintained for the remaining 7 time slots. Also, a very severe standard is required for a switching ON/OFF of a RF power.

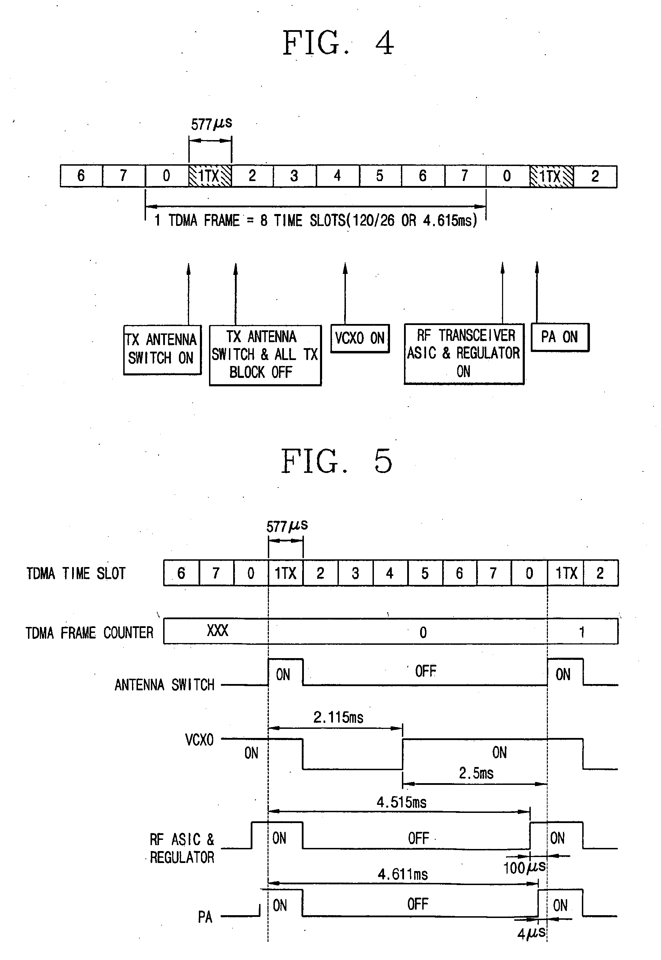

Figure 3 shows a power standard used in accordance with a time slot to which a transmission is allocated. As shown, transmission turn ON and turn OFF times of a TDMA signal are respectively 28µs, and power is controlled in predetermined time units defined in terms of ON/OFF times of an antenna switch. If the mobile station cannot satisfy this standard, AM splash is generated at a mobile station allocated to an adjacent time slot and frequency. AM splash means that a pulsed radio signal causes an interruption in an adjacent frequency channel. Accordingly, the pulsed radio signal has to satisfy a defined ON/OFF standard as shown in the drawing in order to minimize AM splash.

Currently, many blocks used in a mobile station implement a power ON/OFF operation while calling and a normal operation is performed for each block. Also, an antenna switch is actually used in order to realize the standard of 28µs of ON/OFF time. It is, however, very difficult to implement a power ON/OFF operation while calling for some blocks such as voltage controlled crystal oscillator (VCXO).

Also, according to the related-art mobile station power ON/OFF algorithm, it was difficult to implement a defined time standard for each block of the mobile station.

In addition, power always has to be turned ON or a stand-by state has to be maintained for blocks which are not accorded with the time standard. This increases a power consumption of a battery of the mobile station.

### SUMMARY OF THE INVENTION

An object of the invention is to solve at least the above problems and/or disadvantages and to provide at least the advantages described hereinafter.

Another object of the present invention is to provide a system and method for applying a power signal of a mobile station in accordance with a time standard.

Another object of the present invention is to provide a method for applying a power signal of a mobile station which increases use time of a battery of the mobile station by controlling a power signal appliance based on a frame counter.

To achieve these and other advantages, the present invention provides a system and method for applying a power signal of a mobile station comprising : resetting a frame counter value of a frame which starts a transmission as '0'; and controlling a power ON signal after delay time set for each block inside the mobile station whenever the frame counter value is changed. Each turn ON time of each block inside of the mobile station is considered before switching on an antenna switch and thus a power ON signal is applied to each block in advance in accordance with said each turn ON time, thereby stably operating the mobile station and reducing a consumption power of a battery of the mobile station. Preferably, the mobile station is a GSM mobile station or a TDMA based standard, for example, a mobile station used in a system such as a GPRS.

### BRIEF DESCRIPTION OF THE DRAWINGS

Figure 1 is a drawing showing an FDMA frame and a TDMA frame of a GSM system;

Figure 2 is a drawing showing a TDMA frame structure wherein a transmission is allocated to 1 time slot;

Figure 3 is a drawing showing a power standard according to a time slot to which a transmission is allocated;

Figure 4 is a drawing showing a timing example of a power ON/OFF control signal according to the present invention;

Figure 5 is a drawing showing a timing example of a power ON/OFF control signal using TDMA frame counter information according to the present invention; and

Figure 6 is a flow chart showing processes for applying a power signal of a mobile station according to the present invention.

### DETAILED DESCRIPTION OF THE PREFERRED EMBODIMENTS

The present invention is preferably implemented in a mobile station which operates using a GSM method based on a TDMA communication technique. However, the present invention can be applied to other types of TDMA methods as well as systems which operate using other communication standards. For example, the present invention can be applied to a terminal which uses a general packet radio services (GPRS) based network. Also, the present invention is not limited to the case of data transmission but also can be applied to a case of data reception.

Blocks which are capable of controlling power ON/OFF in a GSM mobile station include a power amplifier PA, an external voltage controlled crystal oscillator VCXO, and a transceiver application specific integrated circuit ASIC as well as other blocks. The transceiver ASIC is a chip which includes a RF low noise amplifier (LNA), a mixer, a PLL, a regulator, etc. For illustrative purposes only, a transceiver ASIC including a regulator and a synthesizer block will be explained. However, as will be explained the present invention may implement an algorithm which indicates the turn ON time of every block inside the mobile station, and therefore may be applied to other blocks which are not to be explained in following illustrative embodiments.

Figure 4 shows a timing example of a power ON/OFF control signal of the GSM mobile station according to one embodiment of the present invention. In this example, turn ON time of the PA satisfies a time standard of 4 µs. However, a stable set up time of the external VCXO greatly exceeds a time standard as 2.5ms. Meanwhile, lock time of the transceiver ASIC synthesizer block is 10 µs, and a turn ON time of the internal regulator is 100 µs. The lock time 10 µs of the synthesizer block corresponds to a case that a power is turned ON.

Also, since the turn ON time of the regulator inside the transceiver ASIC is 100 µs, switching within 28 µs, which corresponds to the time standard in Figure 1, is impossible. That is, it means that for a minimum time more than 100µs, the turn ON time of the regulator inside the transceiver ASIC is necessary to normally operate the transceiver ASIC by turning on again after completely turning off.

Also, in the current mobile station power ON/OFF algorithm, a block having a long set up time such as the external VCXO is always turned ON, and some blocks maintain a stand-by mode state without completely turning on/off, thereby waiting until a next transmission time slot. Stand-by mode state means a state in which a minimum operational state is internally maintained. This state is a mobile station state in which calling is not performed. Also, the turn ON time of each block may correspond to values on a datasheet of common blocks that are actually used in the GSM mobile station.

In case of a TDMA signal, when a certain frame starts a transmission, the system counts each frame in order to synchronize each frame. By doing this, the mobile station can know exactly when to start a transmission and when to start a reception. Also, through the frame counter information, each frame information of a channel can be identified. Therefore, the frame counter value is automatically set as '0' in a frame where a first transmission is performed, and then each frame is counted in the mobile station.

Figure 5 shows a power controlling method according to the present invention. In this method, a power ON signal for each block is controlled using the TDMA frame counter information. When the mobile station starts a transmission, the frame counter is reset to '0' and is gradually increased. Whenever the frame counter is changed, a power ON signal is applied after a delay time of each block. Herein, the delay time of each block is set by deducting each turn ON time of each block from one frame time. That is, power is applied to each block in advance in accordance with each turn ON time of each block. Compared with Figure 4, after the frame counter is changed, a power ON signal is applied to the PA block with delay time of 4.611ms (4.615ms-4µs), to the external VCXO block with delay time of 2.115ms (4.615ms-2.5ms), and to the transceiver block with delay time of 4.515ms (4.615ms-0.1ms). These values are merely exemplary of the present invention. Other delay times may be used if desired.

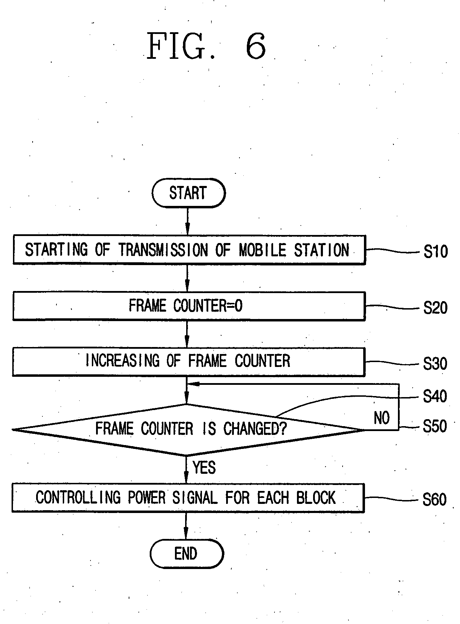

Figure 6 is a flow chart showing processes for applying a power signal of the mobile station according to the present invention. Initially, the mobile station starts a transmission in the mobile communication system (S10). Herein, the frame counter is reset to '0' in a frame that the mobile station starts the transmission (S20). Then, the frame counter is increased by 1 unit (S30). Then, it is judged whether the frame counter has been changed (S40). If the frame counter has not changed, waiting is performed until the frame is changed (S50). Whenever the frame counter is changed, the power ON signal is applied after delay time of each block (S60).

The time obtained by deducting each turn ON time of each block from one frame time is set as delay time of each block, and power is applied to each block before the turn ON time for which each block can be stably operated or is applied in advance of the turn ON time before the antenna switch is turned ON. As a result, the mobile station can be stably operated and consumption of power can be reduced.

As mentioned, in the method for applying a power signal of a mobile terminal according to the present invention, the turn ON time for each block inside the mobile station is considered thus to set each delay time, and a power is applied to each block in advance before the antenna switch is turned ON, thereby stably operating the mobile station.

Also, a power ON timing is set for each block which had to be always maintained as a stand-by state not power-ON/OFF states, thereby reducing a consumption power.

Besides, the present invention shows an algorithm easily applied by satisfying a difficult standard thus to be used as a base of next technique development.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for controlling a mobile station in a mobile communication system, comprising :
setting a frame counter value of a frame to an initial value when a transmission or a reception is started ; and
controlling a power signal appliance whenever the frame counter is changed.

2. The method of claim 1, wherein the mobile communication system is a TDMA-based system .

3. The method of claim 2, wherein the TDMA-based system is one of GSM and GPRS.

4. The method of claim 1, wherein the initial value is '0'.

5. The method of claim 1, wherein controlling a power signal appliance :
setting a delay time for a turn ON time of a predetermined number blocks inside the mobile station; and
applying a power ON signal in advance to each block in accordance with the delay time.

6. The method of claim5, wherein the predetermined number of blocks include at least one of a VCXO, a PA, and a transceiver ASIC including a synthesizer and a regulator.

7. The method of claim5, wherein the delay time is obtained by deducting the turn ON time of each block from one frame time.

8. The method of claim 7, wherein said one frame time is 4.615ms, one TDMA frame time.

9. A method for controlling a mobile station in a mobile communication system, comprising :
starting a transmission or a reception for a mobile station;
setting a frame counter value to an initial value;
increasing the frame counter value; and
controlling a power signal for a predetermined number of blocks inside the mobile station when the frame counter value changes.

10. The method of claim 9, wherein the mobile station is used in a TDMA based system.

11. The method of claim 10, where in the TDMA-based system is one of a GSM system and a GPRS system.

12. The method of claim 9, wherein the initial value is '0'.

13. The method of claim 9, wherein controlling a power signal for each block is performed by setting a delay time in accordance with a turn ON time of each block inside the mobile station and then applying a power ON signal in advance.

14. The method of claim , wherein the blocks inside the mobile station include at least one of a PA, an external VCXO, and a transceiver ASIC including a synthesizer and a regulator.

15. The method of claim13, wherein the delay time is obtained by deducting the turn ON time of each block from one frame time.

16. The method of claim 15, wherein said one frame time is 4.615ms, one TDMA frame time.

17. A system for controlling a mobile station in a mobile communication system, comprising:
a frame counter set to an initial value when a transmission or reception is initiated; and
a controller which applies a power signal to a predetermined number of blocks of the mobile station when a value of the frame counter changes.

18. The system of claim 17, wherein the mobile station is a TDMA-based system.

19. The system of claim 18, wherein the TDMA-based system is a GSM system or a GPRS system.

20. The system of claim 17, wherein the predetermined number of blocks of a mobile station is greater than 1.

21. The system of claim 17, wherein the controller applies the power signal by setting a delay time in accordance with a turn ON time of each of the blocks and then applies a power ON signal.

22. The system of claim 21, wherein a controller applies the power ON signal in advance of operation of an antenna switch.

23. The system of claim 17, wherein the blocks include at least one of a power amplifier, an external VCXO, and a transceiver ASIC which includes a synthesizer and a regulator.

24. The system of claim 23, wherein the delay time is obtained by subtracting the turn ON time of each block from one frame time.

25. The system of claim 24, wherein said one frame time is 4.615ms, equaling one TDMA frame time.
